Europäisches Patentamt

European Patent Office

Office européen des brevets

(11) Veröffentlichungsnummer: **0 234 473**
A2

(12) # EUROPÄISCHE PATENTANMELDUNG

(21) Anmeldenummer: 87102174.7

(22) Anmeldetag: 16.02.87

(51) Int. Cl.³: **B 29 C 67/22**
//B29L31/58

(30) Priorität: 28.02.86 DE 3606614

(43) Veröffentlichungstag der Anmeldung:
02.09.87 Patentblatt 87/36

(84) Benannte Vertragsstaaten:
AT BE DE ES FR GB IT NL SE

(71) Anmelder: METZELER SCHAUM GMBH
Donaustrasse 51
D-8940 Memmingen(DE)

(72) Erfinder: Kolenda, Udo
Berghaldenweg 18
D-8941 Woringen(DE)

(72) Erfinder: Riemhofer, Franz, Dr.
Grenzhofstrasse 91/2
D-8940 Memmingen(DE)

(72) Erfinder: Titze, Dieter
Schützenstrasse 9
D-7971 Aitrach(DE)

(72) Erfinder: Wolfrum, Dieter
Ringstrasse 23
D-8941 Heimertingen(DE)

(74) Vertreter: Müller, Heinz-Gerd, Dipl.-Ing. et al,
BAYER AG Konzernverwaltung RP Patentabteilung
D-5090 Leverkusen 1, Bayerwerk(DE)

(54) Verfahren zum Einziehen eines Flächengebildes in eine Hinterschäumform.

(57) Um ein luftdurchlässiges, zu hinterschäumendes textiles Flächengebilde, beispielsweise einen Bezugsstoff für ein Sitzpolster, konturgetreu in eine Schäumform einziehen zu können, ist erfindungsgemäß vorgesehen, daß das Flächengebilde zumindest bereichsweise mittels mindestens eines mit Druckluft beaufschlagten, elastisch dehnbaren Kissens an die Formenwandung angepreßt wird.

FIG. 2

EP 0 234 473 A2

0234473

METZELER SCHAUM GMBH

## Verfahren zum Einziehen eines Flächengebildes in eine Hinterschäumform

Die Erfindung betrifft ein Verfahren zum konturgetreuen Einziehen eines zu hinterschäumenden, textilen Flächengebildes in eine Schäumform.

Beim direkten Hinterschäumen von textilen Flächengebilden, wie z.B. Bezügen von Polsterteilen, insbesondere für die Kraftfahrzeugindustrie, ist es erforderlich, daß diese Stoffe vor dem Hinterschäumen konturgetreu in die Form eingelegt werden. Soweit diese Bezüge schon vorkonfektioniert, d.h. aus einzelnen Teilen zusammengenäht sind, weisen diese praktisch schon die spätere Polsterform auf und können leicht in die Form eingelegt werden, wobei die restliche Anpressung während des Hinterschäumens durch den aufschäumenden Schaum selbst erfolgt, da hierbei ein Schäumdruck von bis zu 3 bar entsteht. Für nicht vorkonfektionierte Bezüge ist es ferner bekannt, diese unter Erzeugung eines Vakuums in die Schäumform konturgetreu einzuziehen. Dies ist jedoch nur möglich, wenn derartige Bezugsstoffe selbst luftundurchlässig sind, oder aber auf der Rückseite mit einer luftundurchlässigen Folie kaschiert sind.

Verwendet man jedoch einen luftdurchlässigen Bezugsstoff, der lediglich mit einer dünnen Schaumstoffolie kaschiert ist, um die für ein gutes Sitzklima erforderliche Luftdurchlässigkeit beizubehalten, so ist ein Vakuumverfahren

MET 190

zum Einziehen des Stoffes nicht anwendbar. Man hat daher schon versucht, den Stoff mittels mechanischer Stempel in die Form einzuziehen, was jedoch insbesondere bei sehr konturierten Oberflächen einen erheblichen apparativen Aufwand erfordert. Darüber hinaus ist dieses Verfahren nur sehr schwer anwendbar, wenn das zu fertigende Polsterteil größere Hinterschneidungen aufweist, die praktisch nur durch zusätzliche, seitlich ausfahrbare Stempel erfaßt werden können.

Der Erfindung liegt daher die Aufgabe zugrunde, ein Verfahren anzugeben, wonach auf einfache Weise ein konturgetreues Einziehen auch luftdurchlässiger, textiler Flächengebilde in Schäumformen mit sehr konturierter Oberfläche und/oder Hinterschneidungen möglich ist.

Zur Lösung dieser Aufgabe ist erfindungsgemäß vorgesehen, daß das textile Flächengebilde zumindest bereichsweise mittels mindestens eines, mit Druckluft beaufschlagten, elastisch dehnbaren Kissens an die Formenwandung angepreßt wird.

Dabei ist es möglich, in den nicht hinterschnittenen Bereichen der Schäumform die Anpressung des Flächengebildes mittels mechanischer Stempel und allein in den hinterschnittenen Bereichen mittels aufblasbarer Kissen vorzunehmen.

Es ist aber auch möglich, daß das Flächengebilde mittels eines einzigen, den gesamten Formhohlraum ausfüllenden Kissens, angepreßt wird.

Damit ist es also möglich, mit nur relativ geringem Aufwand derartige textile Flächengebilde konturgetreu in eine derartige Schäumform einzuziehen. Es ist dabei nicht

MET 190

erforderlich, daß der Anpreßdruck auch während der ersten Phase des Einfüllens des Schaumstoff-Reaktionsgemisches aufrecht erhalten bleibt. Durch den hohen Preßdruck beim Einziehen mittels eines derartigen aufblasbaren Kissens, wobei der Druck bis zu 6 bar betragen kann, wird der Stoff so hinreichend gedehnt, daß er sich zunächst einmal an alle Hinterschneidungen und sonstigen ausgesparten oder eingezogenen Konturen anlegt.

Es ist dann möglich, nach Entlüften und Herausnehmen des Kissens das textile Flächengebilde direkt zu hinterschäumen, wobei es sich dann wieder durch den Schäumdruck der Kontur der Schäumform genau anpaßt.

Es ist aber auch möglich, daß das eingelegte und aufgeblasene Kissen in der Form verbleibt und direkt ausgeschäumt wird.

Diese aufblasbaren Kissen bestehen zweckmäßigerweise aus Gummi oder aus einer entsprechenden Polyurethan-Folie, die entsprechend elastisch dehnbar sein müssen.

Beim direkten Ausschäumen des Kissens, das dabei zweckmäßigerweise aus einer solchen PU-Folie besteht, kann diese Folie anschließend nach dem Ausschäumen perforiert werden, um die erforderliche Luftdurchlässigkeit zu gewährleisten.

Anhand einer schematischen Zeichnung sind Aufbau und Wirkungsweise von Ausführungsbeispielen nach der Erfindung näher erläutert. Dabei zeigen

Fig. 1    einen Längsschnitt durch eine Schäumform mit eingelegtem, textilem Flächengebilde sowie mechanischen Stempeln und aufblasbaren Kissen in

MET 190

den Hinterschneidungsbereichen und

Fig. 2    einen Längsschnitt durch eine Schäumform mit eingelegtem, textilem Flächengebilde und einem einzigen aufgeblasenen Kissen.

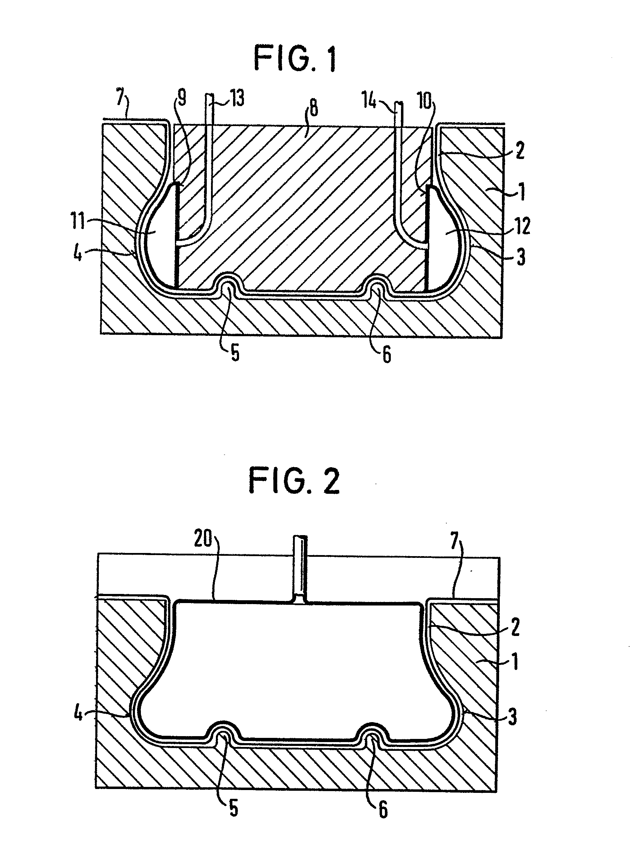

In Fig. 1 ist zunächst das Unterteil 1 einer Schäumform mit einer auszuschäumenden Innenkontur 2 für einen Kraftfahrzeugsitz gezeigt. Der Formenhohlraum weist dabei für die beiden Sitzwangen entsprechende Hinterschneidungen 3 und 4 und für entsprechende Konturierungen der Sitzoberfläche die beiden Vorsprünge 5 und 6 auf. In die Schäumform 1 ist nunmehr ein textiles Flächengebilde in Form eines Bezugsstoffes 7 eingezogen, das üblicherweise auf seiner Rückseite mit einer Schaumstoffolie kaschiert ist, die dann direkt mit dem Schaumstoff des eigentlichen Polsters hinterschäumt wird.

Die in der Projektion des freien Schäumformquerschnittes liegenden Bereiche des Bezugsstoffes 7 sind nunmehr mittels eines mechanischen Stempels 8, der auch mehrteilig ausgeführt sein kann, in die Schäumform 1 niedergebracht und konturgetreu unter Umhüllung, beispielsweise der Vorsprünge 5 und 6, an die Schäumform angelegt.

Für die hinterschnittenen Bereiche 3 und 4 sind seitlich in entsprechenden Rückschnitten 9 und 10 des mechanischen Stempels 8 aufblasbare Kissen 11 und 12 geführt, die nach dem Niederbringen des Stempels 8 über die schematisch angedeuteten Zuleitungen 13 und 14 mit Preßluft unter einem Druck von bis zu 6 bar augeblasen werden. Dadurch werden auch die Abschnitte des Bezugsstoffes 7 im Bereich der Hinterschneidungen 3 und 4 an die Innenwandung 2 des Formenhohlraumes angepreßt.

MET 190

Durch dieses Anpressen mittels Stempel 8 und Kissen 11 und 12 wird der Stoff 7 soweit gedehnt und gereckt, daß er sich zunächst einmal voll der vorgegebenen Kontur anpaßt. Nach Entlüften der Kissen 11 und 12 und Herausziehen des Stempels 8 wird der Stoff 7 dann zwar geringfügig nachgeben, jedoch im wesentlichen die vorgereckte Kontur beibehalten. Nach Einbringen des Schaumstoff-Reaktionsgemisches und Schließen des nicht näher dargestellten Formendeckels wird dann während des Aufschäumens der Stoff 7 wieder in die bereits vorgereckte Kontur gepreßt. Dies insbesondere auch deshalb, weil der beim Aufschäumen des Reaktionsgemisches auftretende Schäumdruck bis zu 3 bar betragen kann.

Nach dem in Fig. 2 dargestellten Ausführungsbeispiel ist der Bezugsstoff 7 durch ein einziges, den gesamten Formenhohlraum ausfüllendes Kissen 20 eingepreßt, was gegenüber dem Ausführungsprinzip nach Fig. 1 eine erhebliche Einsparung darstellt, da hier ein mechanischer Stempel nicht erforderlich ist; die Wirkungsweise ist jedoch die gleiche.

Die aufblasbaren Kissen bestehen zweckmäßigerweise aus dünnem, hochelastischem Gummituch. Es ist aber auch möglich, dafür eine Folie aus Polyurethan zu verwenden. Dies ist besonders bei einem Ausführungsbeispiel nach Fig. 2 zweckmäßig, wenn nämlich das Kissen 20 in der Form verbleiben und direkt ausgeschäumt werden soll. Dazu wird zweckmäßigerweise das Kissen 20 auf seiner Außenseite mit einer Kleberschicht versehen, um eine feste Haftung zwischen dem Kissen und dem schaumstoffbeschichteten Polsterstoff 7 zu erreichen. Nach einer Entlüftung des Kissens 20 kann dieses dann unmittelbar mit dem auzuschäumenden Schaumstoffgemisch befüllt werden, wodurch sich auch hier dann wieder der Bezugsstoff 7 genau an die In-

MET 190

nenkontur der Schäumform anlegt. Um auch in diesem Falle die gewünschte Luftdurchlässigkeit des Polsterbezuges sicherzustellen, ist es zweckmäßig, wenn der Bezug und damit die Folie des Kissens 20 anschließend von außen durch Nadelung oder entsprechende andere Verfahren perforiert wird. Mit dem beschriebenen Verfahren ist es also auf einfache Weise möglich, auch luftdurchlässige Bezugsstoffe für ein Schaumstoffpolster ohne vorheriges konturgetreues Zusammensetzen und Vernähen einstückig in eine Schäumform einzuziehen und zu hinterschäumen.

MET 190

Patentansprüche

1.     Verfahren zum konturgetreuen Einziehen eines zu hinterschäumenden textilen Flächengebildes in eine Schäumform, dadurch gekennzeichnet, daß das Flächengebilde zumindest bereichsweise mittels mindestens eines mit Druckluft beaufschlagten, elastisch dehnbaren Kissens an die Formenwandung angepreßt wird.

2.     Verfahren nach Anspruch 1, dadurch gekennzeichnet, daß in den nicht hinterschnittenen Bereichen der Schäumform die Anpressung des Flächengebildes mittels mechanischer Stempel und in den hinterschnittenen Bereichen mittels aufblasbarer Kissen erfolgt.

3.     Verfahren nach Anspruch 1, dadurch gekennzeichnet, daß das Flächengebilde mittels eines einzigen, den gesamten Formenhohlraum ausfüllenden Kissens angepreßt wird.

4.     Verfahren nach einem der Ansprüche 1 bis 3, dadurch gekennzeichnet, daß nach Aufblasen des Kissens und Anpressen des Flächengebildes das Kissen wieder entlüftet und entfernt und das eingepreßte Flächengebilde direkt hinterschäumt wird.

5.     Verfahren nach Anspruch 3, dadurch gekennzeichnet, daß das eingelegte und aufgeblasene Kissen in der Form verbleibt und direkt ausgeschäumt wird.

MET 190

6. Verfahren nach Anspruch 1 bis 5, dadurch gekennzeichnet, daß das Kissen aus Gummi besteht.

7. Verfahren nach Anspruch 1 bis 5, dadurch gekennzeichnet, daß das Kissen aus einer PU-Folie besteht.

8. Verfahren nach Anspruch 5, dadurch gekennzeichnet, daß das Kissen auf seiner Außenseite mit einem Kleber beschichtet wird.

9. Verfahren nach Anspruch 5, 7 und 8, dadurch gekennzeichnet, daß das Kissen nach dem Ausschäumen perforiert wird.

MET 190

## FIG. 1

## FIG. 2

MET 190